Europäisches Patentamt

European Patent Office

Office européen des brevets

(19)

(11) Veröffentlichungsnummer: **0 245 728 B1**

# EUROPÄISCHE PATENTSCHRIFT

(12)

(45) Veröffentlichungstag der Patentschrift: **22.01.92**

(21) Anmeldenummer: **87106376.4**

(22) Anmeldetag: **30.04.87**

(51) Int. Cl.5: **C08J 7/04**, C08F 220/00, C09D 4/02

(54) Verfahren zur Herstellung einer kratzfesten und witterungsbeständigen Beschichtung auf einem Formkörper.

(30) Priorität: **14.05.86 DE 3616176**

(43) Veröffentlichungstag der Anmeldung:
**19.11.87 Patentblatt 87/47**

(45) Bekanntmachung des Hinweises auf die
Patenterteilung:
**22.01.92 Patentblatt 92/04**

(84) Benannte Vertragsstaaten:
**AT CH DE ES FR GB IT LI NL**

(56) Entgegenhaltungen:
**DE-A- 2 164 716**
**DE-A- 2 928 512**

(73) Patentinhaber: **Röhm GmbH**
**Kirschenallee Postfach 4242**
**W-6100 Darmstadt 1(DE)**

(72) Erfinder: **Siol, Werner, Dr.**
**Goerdelerweg 34**
**W-6100 Darmstadt(DE)**
Erfinder: **Felger, Erwin**
**Jägertorstrasse 29**
**W-6100 Darmstadt(DE)**
Erfinder: **Arnold, Werner**
**Schlossgraben 28**
**W-6117 Schaafheim(DE)**

EP 0 245 728 B1

**Beschreibung**

Gebiet der Erfindung

Die Erfindung betrifft ein Verfahren zum Überziehen von Formkörpern, insbesondere von Kunststoffen, wie organischen Gläsern, mit einer vornehmlich klaren Beschichtung in Form einer gehärteten dünnen Schicht, die durch Polymerisation von im wesentlichen polyfunktionellen Acryl- und/oder Methacrylverbindungen entsteht, und die sich durch hohe Kratzfestigkeit auch unter extremen Witterungsbedingungen auszeichnet.

Stand der Technik

Nach der DE-A-21 64 716 und der DE-A-24 55 715 kann die Polymerisation solcher Systeme mit thermisch zerfallenden Polymerisationsinitiatoren, den üblichen öllöslichen Peroxiden und Azoverbindungen, oder durch Bestrahlung, z.B. durch Einwirkung von UV-Strahlung in Gegenwart von Photoinitiatoren, durchgeführt werden. Bevorzugt wendet man die UV-Initiierung an, da diese auch in Anwesenheit von Luftsauerstoff durchführbar ist. Nach der DE-A-29 28 512 ergibt die Durchführung einer solchen UV-Polymerisation bei Temperaturen zwischen 70 Grad Celsius und der Glastemperatur des zu beschichtenden Kunststoffes kratzfeste Überzüge mit verbesserter Haftung.

Die Verwendung von so beschichteten Platten zeigt jedoch, daß die Witterungsbeständigkeit der vernetzten Polymerisatschicht ungenügend ist. Dies dürfte hierbei vornehmlich auf den Einfluß der im Lack verbliebenen nicht umgesetzten Anteile an UV-Initiator zurückzuführen sein.

Aufgabe und Lösung

Es bestand die Aufgabe, die Witterungsbeständigkeit einer kratzfesten Beschichtung aus polymerisierten im wesentlichen polyfunktionellen (Meth)acrylaten auf einem Formkörper, insbesondere aus thermoplastischem oder thermoelastischem Kunststoff zu verbessern, wobei die Polymerisation unter Ausschluß einer UV-aktiven Verbindung durchzuführen war. Die Methode der Wahl sollte die in der DE-A-21 64 716 und in der DE-A-24 55 715 ebenfalls angegebene Möglichkeit sein, dort angegebene, thermisch zerfallende Polymerisationsinitiatoren einzusetzen.

Versuche, nach der Beschreibung von DE-A-24 55 715 einen gehärteten Film aus polyfunktionellen Acrylmonomeren in Gegenwart der dort beschriebenen thermischen Polymerisationsinitiatoren, wie Azobisisobutyronitril, Azo-bis-2,4-dimethylvaleronitril, Benzoylperoxid oder Di-tert.-butylperoxid und weiterer ähnlicher thermischer Polymerisationsinitiatoren wie tert.-Butylperoctoat oder Dilauroylperoxid zu erhalten, ergaben, daß die erzeugten Beschichtungen noch nicht einmal kratzfest waren. Die Beschichtungen waren auf einer Acrylglasplatte mit einem Monomerengemisch aus 75 Gew.-Teilen Trimethylolpropantriacrylat und 20 Gew.-Teilen Pentaerythrittetraacrylat mit 5 Gew.-Teilen eines der oben genannten Initiatoren in 10-minütiger Polymerisation bei 100 Grad Celsius in Stickstoffatmosphäre hergestellt worden. überraschenderweise wurde gefunden, daß aus den gleichen Monomeren bzw. Monomermischungen durch Polymerisation in Gegenwart peroxidischer Initiatoren doch hochkratzfeste und sehr witterungsbeständige Beschichtungen auf Kunststofformkörpern erhalten werden, wenn als thermische, peroxidische Polymerisationsinitiatoren, Initiatoren mit einer Halbwertzeit von < 2 Minuten bei 100 Grad C, insbesondere Dialkylperoxydicarbonate eingesetzt werden und wenn die polymerisierbare Monomerenmischung höchstens 30 Gew.-%, bevorzugt höchstens 15 Gew.-% an Methacrylatmonomeren enthält.

Die Erfindung betrifft daher ein Verfahren zur Herstellung einer kratzfesten und witterungsbeständigen Beschichtung auf einem Formkörper durch Aufbringen eines Überzugs aus einem radikalisch polymerisierbaren Acryl-Monomeren mit wenigstens zwei polymerisierbaren Kohlenstoff-Doppelbindungen allein oder im Gemisch mit anderen, eine polymerisierbare Doppelbindung enthaltenden Monomeren, wobei ein Monomerengemisch höchstens 30 Gew.-% Methacryl-Monomere enthält, und aus einem peroxidischen Initiator, und Härten des Überzugs durch Erhitzen desselben auf eine Temperatur > 70 Grad C, das dadurch gekennzeichnet ist, daß die Beschichtung mit aliphatischen Peroxydicarbonaten als peroxidischen Initiatoren, die in Mengen von 0,1 bis 10 Gew.-%, bezogen auf das Gesamt-Beschichtungsmittel zugesetzt werden, und in Gegenwart von 1 bis 30 Gew.-%, bezogen auf die die Beschichtung bildenden Monomeren, UV-Schutzmitteln, in Zeiten, die im Sekundenbereich liegen, ausgehärtet wird.

Erfindungsgemäß beschichtete Formkörper sind besonders solche, die aus thermoplastischem oder thermoelastischem Kunststoff bestehen.

Diese Lösung ist, da diese Peroxyde nicht als übliche Polymerisationsinitiatoren bei der Herstellung von Polyacryl- und Polymethacryl-Verbindungen oder auch von Polyvinylverbindungen, wie Polyvinylestern, eingesetzt werden, sehr überraschend.

Dialkylperoxydicarbonate finden zwar als sogenannte Tieftemperatur-Initiatoren, speziell bei der Herstellung von Polyvinylchlorid, allein oder zusammen mit anderen bei höheren Temperaturen zerfallenden, bekannten Initiatoren, wie Dilauroylperoxid, in immer stärkerem Maße Verwendung, sie dienen jedoch dabei der beträchtlichen Verkürzung der bei alleiniger Verwendung sonst üblicher Initiatoren langen Inhibierungszeit. Dieser Effekt spielt bei der Polymerisation von Acrylaten und speziell von polyfunktionellen Acrylaten mit üblichen Polymerisationsinitiatoren, wie Dilauroylperoxid oder Azodiisobutyronitril oder tert.-Butylperoctoat, keine Rolle. Eine sichere Deutung des überraschenden Effektes kann nicht gegeben werden. Möglicherweise ist die Struktur der beim Zerfall der Peroxydicarbonate entstehenden Radikale, und damit deren Reaktivität für Bedingungen zur Bildung einer harten Acrylatschicht von Bedeutung.

Unter Umständen kann so auch der Befund gedeutet werden, daß der Anteil an Methacrylaten < 30 Gew.-%, bevorzugt < 15 Gew.-%, liegen soll.

Bewitterungsversuche im Xenotest zeigten auch, daß erfindungsgemäß hergestellte Beschichtungen auf z.B. extrudiertem Acrylglas, relativ gute Bewitterungsergebnisse im Gegensatz zu mit UV-Initiatoren hergestellten Beschichtungen auf der gleichen Monomerbasis erbrachten.

Es wurde weiter gefunden, daß die Witterungsbeständigkeit erfindungsgemäßer, thermisch aus polyfunktionellen (Meth)acrylaten, hergestellter Überzüge, durch Mitverwendung von UV-Schutzmitteln und Alterungsschutzmitteln, insbesondere von einpolymerisierten UV-Schutzmitteln, noch wesentlich verbessert werden kann.

Die erfindungsgemäß hergestellten Beschichtungen bzw. Überzüge sollten aus wenigstens 30 Gew.-% einer polyfunktionellen Acrylverbindung, wie sie beispielsweise oben genannt sind, aufgebaut sein, und weniger als 30 Gew.-% einer weiteren einpolymerisierbaren Verbindung, wobei sich z.B. als polymerisierbare Verbindungen, insbesondere Acrylsäure und/oder Methacrylsäure bewährt haben, enthalten.

## Vorteile der Erfindung

Vergleiche der Kratzfestigkeit der erfindungsgemäß hergestellten Überzüge mit bekannten kratzfesten Überzügen auf Polysiloxanbasis auf Kunststoffflächen zeigt, daß die neuen Überzüge ebenso gute, wenn nicht noch höhere Kratzfestigkeiten aufweisen. Die Herstellung der neuen Beschichtung ist wesentlich rationeller, da diese innerhalb weniger Minuten durchhärtet, während die Polysiloxan-Beschichtung bei vergleichbaren Härtungstemperaturen mehrere Stunden Härtungszeit beansprucht. Hinsichtlich ihres Bewitterungsverhaltens kann die neue kratzfeste Beschichtung deutlich besser als die mit UV-Initiatoren erhaltene beurteilt werden.

Ein besonderer Vorzug der erfindungsgemäßen Beschichtung besteht darin, daß diese Kratzfestschicht auf nahezu jedem Untergrund haftet. So können mit dieser Beschichtung sogar die sonst so trägen Kunststoffe wie Polyäthylen/Polypropylen beschichtet werden. Im Gegensatz zur Beschichtung mit UV-Initiatoren ist man frei in der Wahl der UV-Schutzmittel und kann diese so optimal dem zu schützenden Substrat anpassen.

## Durchführung der Erfindung

Eine kratzfeste Beschichtung ist auf Formkörpern allgemein, insbesondere aber auf solchen Kunststoff-Formkörpern zweckmäßig, die eine harte, glänzende Oberfläche haben, aber kratzempfindlich sind. Zu den Kunststoffen, die eine geringe Oberflächenhärte aufweisen, gehören solche, die wenig oder schwach vernetzt sind und sich im thermoplastischen oder thermoelastischen Zustand zu Formkörpern verarbeiten lassen. Hierzu gehören beispielsweise Polymethylmethacrylat, Mischpolymerisate aus Methylmethacrylat und Acrylnitril, Polystyrol, schlagzähe Styrol-Mischpolymerisate, Polyacetal, Polyäthylen, Polypropylen, Polyvinylchlorid, Cellulose oder Polycarbonat auf Bisphenol-A-Basis.

Es lassen sich aber auch Formkörper aus anderen Materialien so kratzfest ausrüsten, z.B. Holz, Metall u.a. mehr.

Die erfindungsgemäße Beschichtung der Kunststoffe wird an dem Formkörper in seiner endgültigen Gestalt, beispielsweise an einem fertigen Spritzgußteil, vorgenommen, da die hochvernetzte kratzfeste Schicht nicht thermoplastisch oder thermoelastisch verformbar ist. In begrenztem Umfang läßt die Beschichtung eine elastische Biegung des Kunststoff-Formkörpers zu. Ein bevorzugter Gegenstand der Erfindung ist die Beschichtung von ebenen Platten oder kontinuierlich erzeugten ebenen Bändern, Hohlprofilplatten oder Folien, wobei die Beschichtung direkt an den Extrusionsvorgang, bevorzugt in kontinuierlicher Vorgehensweise, angeschlossen werden kann.

Aber auch die Beschichtung von in großen Serien hergestellten Spritzgußteilen ist bevorzugt.

Beschichtungsmittel, die erfindungsgemäß mit Peroxydicarbonaten zu einer hochvernetzten, kratzfesten und witterungsbeständigen Beschichtung aushärten, enthalten als wesentlichen Bestandteil ein oder mehrere radikalisch polymerisierbare Acryl-verbindungen mit wenigstens zwei, vorzugsweise drei oder mehr polymerisierbaren Kohlenstoffdoppelbindungen. Die bevorzugten drei-oder höherfunktionellen Monomeren sind Acrylester von drei- oder höherwertigen Alkoholen, wie Glycerin, Trimethylolpropan, 1,2,4-Butantriol, 1,2,6-Hexantriol, Pentaerythrit, Diglycerin oder Dipentaerythrit. Bevorzugte polyfunktionelle Monomere sind Trimethylolpropantriacrylat bzw. Pentaerythrittriacrylat und/oder -tetraacrylat, 1,2,6-Hexantrioltriacrylat.

Der Anteil der Methacryloylgruppen soll möglichst niedrig gehalten werden. Der Anteil beträgt höchstens 30 Gew.-% Methacrylmonomere, bevorzugt höchstens 15 Gew.-%.

Vorzugsweise werden als Monomere mit wenigstens zwei Kohlenstoff-Doppelbindungen zu wenigstens 70 Gew.-% Monomere aus Acrylat-Einheiten eingesetzt.

Die Mitverwendung von Monomeren, die eine oder zwei radikalisch polymerisierbare Doppelbindungen enthalten, bringt Vorteile bei der Handhabung der im allgemeinen hochviskosen drei- und mehrfunktionellen Monomeren und in den Eigenschaften der Beschichtung, z.B. einer verbesserten Flexibilität. Beispiele für brauchbare Monomere mit einer polymerisierbaren Doppelbindung sind Styrol, Acrylnitril, Acrylate bzw. Methacrylate mit 1 bis 10 C-Atomen im Esterrest und die im Esterrest noch, z.B. mit OH-Gruppen, substituiert sein können, und insbesondere Acrylsäure und/oder Methacrylsäure. Besonders bevorzugt sind jedoch Monomere mit einem Siedepunkt > 140 Grad Celsius und einer Acrylgruppe als polymerisierbare Einheit.

Beispiele für geeignete difunktionelle Comonomere sind 1,4-Divinylbenzol oder die Diacrylate und Dimethacrylate von Äthylenglykol, Diäthylenglykol, Tetraäthylenglykol, Propylenglykol-1,2, Butandiol-1,4 oder -1,3, Dimethylpropandiol, Hexandiol-1,6, Neopentylglykol, 2-Äthyl-hexandiol-2,3, wobei wiederum der Anteil an Methacrylaten niedrig zu halten ist.

Die weiter verbesserte Witterungsbeständigkeit der erfindungsgemäßen Kratzfestbeschichtung wird durch eingearbeitete UV-Schutzmittel, z.B. durch nicht polymerisierbare UV-Schutzmittel, wie sie als Zusätze zu Kunststoffen bekannt sind und in Ullmanns Encyklopädie der technischen Chemie, 4. Auflage, Band 15, Seiten 253 bis 260, aufgeführt sind und/oder vorteilhafterweise durch polymerisierbare UV-Stabilisatoren bewirkt. Als Beispiel für polymerisierbare UV-Stabilisatoren sei 3-(2-Benzotriazolyl)-2-hydroxy-5-tert.-octylbenzylmethacrylamid genannt.

Das Mischungsverhältnis der verschiedenen Monomerarten beeinflußt einerseits die Viskosität der Beschichtungsmischung, andererseits die Eigenschaften der ausgehärteten Schicht. Die drei- und mehrfunktionellen Monomeren bringen die höchste Kratzfestigkeit, aber auch eine starke Sprödigkeit hervor. Vorzugsweise beträgt ihr Anteil 30 Gew.-% oder mehr. Der Anteil bifunktioneller Monomerer, die ebenfalls zur Verbesserung der Kratzfestigkeit der damit beschichteten Kunststoffe beitragen mit dem Anteil der monofunktionellen Comonomeren, wird zusammen im allgemeinen nicht über 70 Gew.-% liegen, wobei Beschichtungen, die z.B. bis zu 30 Gew.-% Acrylsäure und/oder Methacrylsäure enthalten, überraschenderweise keine Verschlechterung in der Kratzfestigkeit aufweisen. UV-Schutzmittel werden in Mengen von 1 bis 30 Gew.-%, insbesondere in Mengen von 5 bis 20 Gew.-%, bezogen auf die Mengen der die Beschichtung bildenden Monomeren eingesetzt.

Als thermische Initiatoren enthält das Beschichtungsmittel ein oder mehrere peroxidische Initiatoren mit einer Halbwertzeit < 2 Minuten bei 100 Grad Celsius (Ullmanns Encyklopädie der technischen Chemie, 3. Auflage 1970, Ergänzungsband, Seiten 177 bis 181), bevorzugt aliphatische Peroxydicarbonate, wie beispielsweise Diäthyl-peroxydicarbonat, Di-chloräthyl-peroxydicarbonat, Diisopropyl-peroxydicarbonat, Diisobutyl-peroxydicarbonat, Di-2-äthylhexyl-peroxydicarbonat, Dicyclohexyl-peroxydicarbonat oder mit Alkyl-, insbesondere Methylgruppen substituierten Dicyclohexyl-peroxydicarbonaten. (Siehe dazu Swern, Organic Peroxides, Copyright by John Wiley & Sons, Vol. 1 (1970), Seite 68 bis 73 und Vol. 2, (1971), Seite 863 bis 867). Die Peroxydicarbonate werden in Mengen von 0,1 bis 10 Gew.-%, insbesondere von 1 bis 7 Gew.-%, bezogen auf das Gesamt-Beschichtungsmittel eingesetzt. Daneben können in untergeordneten Mengen, d.h. 0 bis 20 Gew.-% des peroxidischen Initiators mit einer Halbwertzeit < 2 Minuten bei 100 Grad Celsius, auch andere bekannte thermische, peroxydische Initiatoren wie Dilauroylperoxid, tert.-Butylperpivalat oder Dibenzoylperoxid mitverwendet werden.

Zur besseren Anlösung des Haftuntergrundes können dem Beschichtungsmittel auch organische Lösungsmittel, z.B. Methyläthylketon, zugesetzt sein. Eine besonders bevorzugte Ausführungsform besteht darin, die multifunktionellen Monomeren, die mit dem bei niedriger Temperatur zerfallenden Initiator eine hochreaktive Mischung darstellen, erst kurz vor der Anwendung mit den Initiatoren zu mischen, z.B. in einer Mischdüse oder in einer Mehrfachspritzdüse. Wenn Lösungsmittel eingesetzt werden, wird der Initiator darin gelöst. Bei lösungsmittelfreier Applikation wird der Initiator in den reaktionsträgsten Monomeren,

4

bevorzugt in Methacrylaten gelöst. Weitere Zusätze können Antioxidantien oder Polymere, wie z.B. Polyesterharze, sein.

Das Beschichtungsmittel kann mittels verschiedener Techniken, wie Tauchen, Gießen oder Sprühen, diskontinuierlich oder kontinuierlich auf z.B. die Kunststofformkörper, in Schichtdicken von 1 bis 100, vorzugsweise von 2 bis 50 $\mu$m, aufgebracht werden. Beispielsweise bietet sich nach der kontinuierlichen Herstellung von Kunststoffplatten durch Extrusion die Durchführung einer kontinuierlichen Beschichtung, dieser sich gegebenenfalls noch auf höheren Temperaturen befindlichen Platten, wobei diese Temperaturen aber unterhalb der Glastemperatur der Kunststoffplatte liegen, an. Die Aushärtung der Beschichtungsmittel wird normalerweise bei Temperaturen, die unterhalb der Glastemperatur des zu beschichtenden Kunststoffes liegt, durchgeführt. Nach DIN 7742 wird die Glastemperatur bestimmt. Bei sehr schnell verlaufender Aushärtung kann die Beschichtung unter Umständen auch bei Temperaturen oberhalb der Glastemperatur des Polymeren erfolgen. Zum Ausschluß des polymerisationsinhibierenden Sauerstoffs, wird die Polymerisation unter Inertgas, z.B. Stickstoff, durchgeführt. Die Aushärtungszeit liegt im Sekundenbereich, z.B. bei 5 bis 600 Sekunden, und hängt von der Temperatur im Beschichtungsmittel, die u.a. von der Temperatur des zu beschichtenden Substrates mitbestimmt wird, ab. Die optimale Härtungstemperatur der Beschichtung der verschiedenen Polymeren kann bei niedrigeren oder höheren Temperaturen als 100 Grad Celsius liegen, wobei ein zu beachtender Temperaturbereich von etwa 50 bis 200 Grad Celsius in Frage kommt. In der Regel wird die durch das Substrat bedingte maximale Aushärtetemperatur gewählt, da auf diesem Wege besonders gute Haftung und Kratzfestigkeit erzielt wird. Die Aushärtung bei möglichst hoher Temperatur in möglichst kurzer Zeit, z.B. in 10 Sekunden, bringt dabei nicht nur wirtschaftliche Vorteile (schnelleres Verfahren), auch die Kratzfestigkeit ist bei einer schnellen Aushärtung bei hohen Temperaturen deutlich besser als bei einer langen Aushärtung bei niedriger Temperatur.

In der Regel wird die zur Aushärtung benötigte Energie durch IR-Strahler der Monomerenschicht zugeführt. Dabei ist es durchaus wünschenswert, die Leistung der Strahler so einzustellen, daß auf der Substratoberfläche möglichst hohe Temperaturen, u.U. sogar solche oberhalb der Glastemperatur des Substrates erreicht werden. Von besonderem Vorzug ist jedoch das Aushärten der Monomeren durch Eintauchen in eine erwärmte Flüssigkeit. Dadurch erreicht man insbesondere bei kompliziert aufgebauten Spritzgußteilen eine gleichmäßige Aushärtung der Kratzfestschicht.

Bei diesem Verfahren kann man darüber hinaus die kostspielige Inertgasatmosphäre einsparen.

Die Aushärtung der Kratzfestigkeit durch Eintauchen in eine inerte Flüssigkeit, z.B. eine hochkonzentrierte, wäßrige Salzlösung, die die multifunktionellen Monomeren nur schlecht löst, kann auch so durchgeführt werden, daß die inerte Flüssigkeit eine Redox-Komponente für das in der Monomerschicht befindliche Peroxid enthält.

Durchführungsbeispiele

Die nachfolgenden Beispiele sollen die Erfindung erläutern.

Aufgrund der besonders hohen Reaktivität der erfindungsgemäßen Initiator/Monomermischungen empfiehlt sich - speziell bei Vorversuchen - das Arbeiten mit möglichst geringen Substanzmengen.

Die den Beispielen zugrundeliegenden Beurteilungskriterien sind nachfolgend aufgeführt.

Beurteilungskriterien der Kratzfestbeschichtung

| | |
|---|---|
| Optische Beurteilung : | Siehe Angaben bei den Beispielen |
| Kratzfestigkeit : | Note 1 (sehr gute Kratzfestigkeit): Keine Kratzer, selbst wenn die Oberfläche stark mit Stahlwolle 00 gerieben wird. |
| | Note 2 (gute Kratzfestigkeit): Sehr wenig Kratzer, selbst wenn die Oberfläche stark mit Stahlwolle 00 gerieben wird. |
| | Note 3: Kratzfestigkeit gegeben nur bei leichtem Kratzer mit Stahlwolle 00. |
| | Note 4: Kratzfestigkeit vergleichbar mit der des Substrates. |
| | Note 5: Kratzfestigkeit der Beschichtung geringer als die des Substrates. |
| Haftung: | Die ausgehärtete Schicht wird mit einer scharfen Klinge kreuzweise schraffiert (6 horizontale und 6 vertikale Linien, Abstand der Linien ca. 1,5 mm) und anschließend mit einem Klebeband (Tesa®-film) luftblasenfrei beklebt. |
| | Das Klebeband wird anschließend ruckartig in einem Winkel von 90 Grad abgerissen. Diese Prüfung wird 3 mal wiederholt. |
| Beurteilung: | auch nach dreimaligem Abrißtest auf derselben Fläche keinerlei Abriß: Haftung sehr gut |

Auch nach dreimaligem Abrißtest auf derselben Fläche nur geringe Ausfranzungen an den Schnittflächen: Haftung ausreichend

Auch nach dreimaligem Abrißtest, Abriß nur an weniger als 10 % der schraffierten Fläche : teilweise Abriß

Nach dreimaligem Abrißtest, Abriß an mehr als 50 % der schraffierten Fläche : vollständiger Abriß.

Beispiel 1

Auf eine 3 mm dicke, durch Extrusion hergestellte, Polycarbonatplatte (z.B. Makrolon ®281) wird mit einer Rakel ein ca. 10μm dicker Naßfilm der nachfolgend aufgeführten Mischung aufgetragen.

Zusammensetzung der Mischung:

1 g Pentaerythrittetraacrylat
4 g Trimethylolpropantriacrylat
2 g Methyläthylketon
0,1 g Bis(4-t-butylcylohexyl)-peroxydicarbonat ($\hat{=}$ 2 % bezogen auf die Monomerenmischung)

Der aufgetragene Film wird ca. 10 Sekunden unter einer Schutzgasatmosphäre (Stickstoff oder Argon) abgelüftet und anschließend unter Schutzgas mit einem mittelwelligen Infrarotstrahler (ca. 40 KW/qm) in ca. 15 Sekunden gehärtet.

Es resultiert eine kratzfeste Polycarbonatplatte mit hervorragender Optik. Die Haftung der Kratzfestschicht auf dem Polycarbonat ist sehr gut (siehe auch Tabelle 1).

Beispiele 2 - 5 - Einfluß der Initiatormenge auf die Kratzfestigkeit

Die Kratzfestbeschichtung erfolgt wie in Beispiel 1 beschrieben. Es wird lediglich die Menge des eingesetzten Initiators variiert. Man sieht, daß unter diesen Aushärtebedingungen mit 1 - 5 Gew.-% des in Beispiel 1 genannten Initiators sehr gute Kratzfestigkeit erzielt wird. Auch mit 0,5 Gew.-% Initiator wird noch ausreichend gute Kratzfestigkeit erzielt (siehe Tabelle 1).

Beispiele 6 - 14 - Einfluß der Art des Initiators auf die Kratzfestigkeit

Die Kratzfestbeschichtung erfolgt wie in Beispiel 1 beschrieben. Es wird lediglich der eingesetzte Initiator (in allen Fällen 2 Gew.-%) variiert. Die Härtungszeit beträgt in der Regel 20 Sekunden. Initiatoren, die in dieser Härtungszeit keine ausreichende Kratzfestigkeit ergeben, zeigen bei etwas verlängerter Härtungszeit zwar teilweise leicht verbesserte Kratzfestigkeit, diese verlängerte Härtungszeit führt jedoch zur Schädigung des Substrates (siehe Tabelle 2).

Beispiel 15

Man verfährt wie in Beispiel 1, wählt jedoch andere Härtungsbedingungen.

Zusammensetzung der Mischung:

1 g Pentaerythrittetraacrylat
4 g Trimethylolpropantriacrylat
2 g Methyläthylketon
0,2 g Bis(4-t-butylcyclohexyl)-peroxydicarbonat

Nach Ablüften unter Stickstoff wird 100 Sekunden im Stickstoffstrom durch Bestrahlen mit einem langwelligen Infrarotstrahler (25 KW/qm) gehärtet.

Es resultiert eine hochkratzfeste Polycarbonatplatte mit einer hervorragenden Optik.
Kratzfestigkeit: Note 1, Haftung: sehr gut.

Beispiel 16

Man verfährt wie in Beispiel 15, wählt jedoch eine andere Monomerenzusammensetzung:

1 g Pentaerythrittetraacrylat
4 g Trimethylpropantrimethacrylat
und härtet wie in Beispiel 15 angegeben.

Die Kratzfestigkeit der Beschichtung ist gegenüber Beispiel 15 deutlich verringert: Note 3.

Beispiel 17 (Vergleich)

Man verfährt wie in Beispiel 15, wählt jedoch eine andere Monomerenzusammensetzung:
5 g Trimethylpropantrimethacrylat Kratzfestigkeit gegenüber Substrat nicht verbessert: Note 4.

Beispiel 18

Man verfährt wie in Beispiel 1, wählt jedoch eine andere Monomerenzusammensetzung:
0,5 g Acrylsäure
1,0 g Pentaerythrittetraacrylat
3,5 g Trimethylolpropantriacrylat
Es resultiert eine hoch kratzfeste Polycarbonatplatte mit hervorragender Optik.
Kratzfestigkeit: Note 1 - 2,
Haftung der Kratzfestschicht auf dem Untergrund sehr gut.

Beispiel 19

Man verfährt wie in Beispiel 1, wählt jedoch eine andere Monomerenzusammensetzung und verzichtet auf das Lösungsmittel
2 g Pentaerythrittetraacrylat
3 g Hexandioldiacrylat
Dicke des Naßfilms: 6 $\mu$m
Kratzfestigkeit: Note 4

Beispiel 20

Man verfährt wie in Beispiel 19, wählt jedoch eine erhöhte Schichtdicke.
Dicke des Naßfilms: 36 $\mu$m.
Man erhält eine kratzfest beschichtete Polycarbonatplatte von hervorragender Optik, Haftung sehr gut,
Kratzfestigkeit: Note 1.
Besonders bei weniger hoch vernetzter Kratzfestschichten ist daher auf eine ausreichende Dicke zu achten.

Beispiel 21

Man verfährt wie in Beispiel 20, d.h. Dicke des Verfahrens ebenfalls 36 $\mu$m, wählt jedoch eine andere Monomerenzusammensetzung:
2 g Pentaerythrittetraacrylat
2,5 g Hexandioldiacrylat
0,5 g Acrylsäure

Es resultiert eine hoch kratzfeste Polycarbonatplatte mit hervorragender Optik.
Kratzfestigkeit: Note 1 - 2.
Die Haftung auf dem Untergrund ist sehr gut.

Beispiel 22

Man verfährt wie in Beispiel 20, ersetzt die 0,5 g Acrylsäure jedoch durch 0,5 g Cyclohexylmethacrylat.
Es resultiert eine wenig kratzfeste Polycarbonatplatte. Beurteilung der Kratzfestigkeit: Note 3.

Beispiel 23

Man verfährt wie in Beispiel 1, wählt jedoch eine andere Monomermischung (Mitverwendung eines polymerisierbaren UV-Absorber).
Zusammensetzung der Mischung:
1 g Pentaerythrittetraacrylat
3,95 g Trimethylolpropantriacrylat

0,05 g 3-(2-Benzotriazolyl)-2-hydroxy-5-tert.-octyl-benzylmethacrylamid
2 g Methylethylketon
0,2 g Bis(4-t-butylcyclohexyl)-peroxydicarbonat

Es resultiert eine hoch kratzfeste Polycarbonatplatte mit hervorragender Optik. Die Haftung der Kratzfestschicht auf dem Polycarbonat ist sehr gut.
Beurteilung der Kratzfestigkeit: Note 1.

Beispiel 24

Man verfährt wie in Beispiel 23, wählt jedoch bei sonst gleicher Rezeptur eine höhere Menge des einpolymerisierbaren UV-Absorber:
0,25 g 3-(2-Benzotriazolyl)-2-hydroxy-5-tert.-octyl-benzylmethacrylamid

Die Haftung der Kratzfestschicht auf dem Polycarbonat ist sehr gut.
Beurteilung der Kratzfestschicht: Note 1 - 2.

Beispiel 25

Man verfährt wie in Beispiel 1, setzt jedoch der ansonsten unveränderten Rezeptur 0,05 g 2-Hydroxy-4-methoxybenzophenon zu.
Der Initiator wird von 0,1 g auf 0,2 g erhöht.
Es resultiert eine kratzfeste Polycarbonatplatte mit hervorragender Optik. Die Haftung der Kratzfestschicht auf dem Polycarbonat ist sehr gut.
Beurteilung der Kratzfestigkeit: Note 1 - 2.

Beispiel 26

Eine 3 mm dicke Polypropylenplatte (20 cm x 20 cm) wird geschliffen. Anschließend wird - wie in Beispiel 1 beschrieben - ein ca. 20 $\mu$m dicker Naßfilm der folgenden Zusammensetzung aufgetragen:
96 % Trimethylolpropantriacrylat
4 % Bis(4-t-butylcyclohexyl)-peroxydicarbonat
Der Naßfilm wird mit einer Schutzfolie abgedeckt und 15 Minuten im Trockenschrank bei 100 Grad Celsius gehärtet.
Es resultiert eine hoch kratzfeste Platte von hervorragender Optik.
Die Haftung der Kratzfestschicht ist sehr gut.
Beurteilung der Kratzfestigkeit: Note 1.

Beispiel 27

Aushärtung der Kratzfestschicht durch Eintauchen in eine inerte, erwärmte Flüssigkeit.
Eine Polycarbonatplatte wird wie in Beispiel 26 beschrieben beschichtet und anschließend durch Eintauchen in eine 95 Grad Celsius warme Lösung von 50 Gew.-% Kaliumaluminiumsulfat dodecahydrat in Wasser innerhalb von 3 Minuten gehärtet.
Beurteilung der Platte: Haftung: sehr gut,
Kratzfestigkeit: Note 2.

Beispiel 28

Eine Polypropylenplatte gemäß Beispiel 26 wird geflammt. Anschließend wird durch Sprühauftrag eine Mischung der Zusammensetzung
38 Gew.-% Penterythrittetraacrylat
7 Gew.-% Trimetyhlolpropantriacrylat
4,5 Gew.-% Methacrylsäure
2,5 Gew.-% Bis(4-t-butylcyclohexyl)-peroxydicarbonat
16 Gew.-% Methylethylketon
16 Gew.-% Hexanol-1
16 Gew.-% Diacetonalkohol

aufgebracht und ausgehärtet.
Ergebnis: Haftung: sehr gut, Kratzfestigkeit: Note 1.

Beispiel 29

Man wählt die Kratzfestlackzusammensetzung gemäß Beispiel 1, wählt jedoch eine andere Auftragstechnik (Tauchbeschichtung).
Substrat: Hochmolekulares Polymethylmethacrylat (Plexiglas® GS 233).
Die Aushärtung erfolgt durch IR-Strahlung.
Beurteilung: Hervorragende Optik, Haftung sehr gut,
Kratzfestigkeit: Note 1.

Beispiel 30

Man verwendet die Monomerenzusammensetzung und Auftragstechnik wie in Beispiel 1, wählt jedoch als Substrat eine spritzgegossene, 3 mm dicke Platte eines höher wärmeformbeständigen Polymethylmethacrylates, das ein Copolymeres aus 75 Gew.-% Methylmethacrylat, 14 Gew.-% α-Methylstyrol, 7 Gew.-% Maleinsäureanhydrid und 4 Gew.-% Methylacrylat ist.
Beurteilung direkt nach Aushärtung sowie nach 3 000 Stunden.
Schnellbewitterung:
Optik: hervorragend, Kratzfestigkeit: Note 1,
Haftung sehr gut.

Beispiel 31

Man verfährt wie in Beispiel 1, wählt jedoch andere Substrate (Polystyrol bzw. Hart PVC, gedeckt rot eingefärbt).
In beiden Fällen erhält man ohne jede Vorbehandlung sehr gut haftende Beschichtungen von hervorragender Optik. Beurteilung der Kratzfestigkeit: Note 1.

Tabelle 1

| Einfluß der Initiatormenge auf die Kratzfestigkeit | | |
|---|---|---|
| Beispiel Nr. | Menge des eingesetzten Initiators [Gew.-%] | Beurteilung der Kratzfestigkeit [Note] |
| 2 | 5 | 1 |
| 1 | 2 | 1 |
| 3 | 1 | 1 |
| 4 | 0,5 | 2 |
| 5 | 0,25 | 3 |

Tabelle 2

| Einfluß des Initiatortyps auf die Kratzfestigkeit | | |
|---|---|---|
| Beispiel Nr. | Bezeichnung des Initiators* | Beurteilung der Kratzfestigkeit [Note] |
| 1 | Bis(4-t-Butylcyclohexyl)-peroxydicarbonat | 1 |
| 6 | Bis Cyclohexyl-peroxydicarbonat | 1 |
| 7 | Bis(2-Ethylhexyl)-peroxydicarbonat | 1 |
| 8 | 2,2'-Azobis-(isobutyronitril) | 4 |
| 9 | tert.-Butylperoctoat | 3-4 |
| 10 | tert.-Butylperpivalat | 5 |
| 11 | tert.-Butylperneodecanoat | 4-5 |
| 12 | Dibenzoylperoxid | 5 |
| 13 | Dilauroylperoxid | 3-4 |
| 14 | Mischung aus 1 Teil Bis(4-t-butylcyclohexyl)-peroxydicarbonat und 3 Teilen 2,2'-Azobis-(isobutyronitril) | 1-2 |

* 2 Gew.-%, Aushärtung: ca. 20 Sekunden.

**Patentansprüche**

1. Verfahren zur Herstellung einer kratzfesten und witterungsbeständigen Beschichtung auf einem Formkörper durch Aufbringen eines Überzugs aus einem radikalisch polymerisierbaren Acrylmonomeren mit wenigstens zwei polymerisierbaren Kohlenstoff-Doppelbindungen allein oder im Gemisch mit anderen, eine polymerisierbare Doppelbindung enthaltenden Monomeren, wobei ein Monomerengemisch höchstens 30 Gew.-% Methacryl-Monomere enthält, und aus einem peroxidischen Initiator, und Härten des Überzugs durch Erhitzen desselben auf eine Temperatur > 70 GradC,

   dadurch gekennzeichnet,

   daß die Beschichtung mit aliphatischen Peroxydicarbonaten als peroxidischen Initiatoren, die in Mengen von 0,1 bis 10 Gew.-%, bezogen auf das Gesamt-Beschichtungsmittel Zugesetzt werden, und in Gegenwart von 1 bis 30 Gew.-%, bezogen auf die die Beschichtung bildenden Monomeren, UV-Schutzmitteln, in Zeiten, die im Sekundenbereich liegen, ausgehärtet wird.

2. Verfahren zur Herstellung einer kratzfesten und witterungsbeständigen Beschichtung auf einem Formkörper nach Anspruch 1, dadurch gekennzeichnet, daß die Formkörper aus thermoplastischem oder thermoelastischem Kunststoff bestehen.

3. Verfahren nach den Ansprüchen 1 bis 2, dadurch gekennzeichnet, daß als Monomeres mit wenigstens zwei Kohlenstoff-Doppelbindungen zu wenigstens 30 Gew.-% eine Verbindung mit drei oder mehr Kohlenstoff-Doppelbindungen im Molekül eingesetzt wird.

4. Verfahren nach den Ansprüchen 1 bis 3, dadurch gekennzeichnet, daß als Monomere mit wenigstens zwei Kohlenstoff-Doppelbindungen zu wenigstens 70 Gew.-% Monomere aus Acrylat-Einheiten eingesetzt werden.

5. Verfahren nach den Ansprüchen 1 bis 4, dadurch gekennzeichnet, daß als UV-Schutzmittel ein einpolymerisierbares UV-Schutzmittel eingesetzt wird.

6. Verfahren nach den Ansprüchen 1 bis 5, dadurch gekennzeichnet, daß die Beschichtung mit einem Beschichtungsmittel, das bis zu 30 Gew.-% Acrylsäure und/oder Methacrylsäure enthält, durchgeführt wird.

7. Verfahren nach den Ansprüchen 1 bis 6, dadurch gekennzeichnet, daß die Härtung in einer praktisch sauerstofffreien Schutzgasatmosphäre durchgeführt wird.

8. Verfahren nach den Ansprüchen 1 bis 7, dadurch gekennzeichnet, daß die Härtung der Kratzfestschicht durch Eintauchen in eine inerte Flüssigkeit erfolgt.

9. Verfahren nach den Ansprüchen 1 bis 8, dadurch gekennzeichnet, daß der Formkörper aus Polymethylmethacrylat oder einem aus Methylmethacrylat aufgebauten Mischpolymerisat oder aus einem Polycarbonat besteht.

10. Verfahren nach den Ansprüchen 1 bis 9, dadurch gekennzeichnet, daß ein durch Extrusion erzeugter Formkörper beschichtet wird.

11. Verfahren nach den Ansprüchen 1 bis 10, dadurch gekennzeichnet, daß die Beschichtung unmittelbar nach der Extrusion im extrusionswarmen Zustand des Formkörpers vorgenommen wird.

12. Verfahren gemäß den Ansprüchen 1 bis 9, dadurch gekennzeichnet, daß Spritzgußteile beschichtet werden.

## Claims

1. Process for preparing a scratch-proof and weather-resistant coating on a moulded article by applying a covering of a radically polymerisable acrylic monomer, said monomer having at least two polymerisable carbon double-bonds, alone or mixed with other monomers containing a polymerisable double-bond, a monomer mixture containing at most 30 wt.% of methacrylic monomers, and of a peroxide initiator and by hardening the covering by heating it to a temperature > 70° C, characterised in that the coating is hardened with aliphatic peroxydicarbonates as peroxide initiators within a time period of seconds, said peroxide initiators being added in amounts of 0.1 to 10 wt.%, based on the total coating composition, and in the presence of 1 to 30 wt.%, based on the monomers forming the coating, of ultraviolet protectants.

2. Process for preparing a scratch-proof and weather-resistant coating on a moulded article according to Claim 1, characterised in that the moulded articles comprise thermoplastic or thermoelastic plastics.

3. Process according to Claims 1 and 2, characterised in that a compound, having three or more carbon double-bonds in the molecule, is used, in an amount of at least 30 wt.%, as the monomer having at least two carbon double-bonds.

4. Process according to Claims 1 to 3, characterised in that monomers having acrylate units are used, in amounts of at least 70 wt.%, as the monomers having at least 2 carbon double-bonds.

5. Process according to Claims 1 to 4, characterised in that a homopolymerised ultraviolet protectant is used as an ultraviolet protectant.

6. Process according to Claims 1 to 5, characterised in that the coating is carried out with a coating composition containing up to 30 wt.% of acrylic acid and/or methacrylic acid.

7. Process according to Claims 1 to 6, characterised in that the hardening is carried out in a virtually oxygen-free protective gas atmosphere.

8. Process according to Claims 1 to 7, characterised in that the hardening of the scratch-proof coating is carried out by immersion in an inert liquid.

9. Process according to Claims 1 to 8, characterised in that the moulded article consists of polymethylmethacrylate or a copolymer synthesised from methylmethacrylate, or of a polycarbonate.

10. Process according to Claims 1 to 9, characterised in that a moulded body produced by extrusion is coated.

11. Process according to Claims 1 to 10, characterised in that the coating is carried out immediately after the extrusion, in the extrusion-warm state of the moulded body.

**12.** Process according to Claims 1 to 9, characterised in that injection moulded parts are coated.

**Revendications**

1.  Procédé pour la formation d'un enduit résistant au rayage et stable aux agents atmosphériques sur un corps moulé, par application d'une couche de revêtement composée d'un monomère acrylique susceptible de polymérisation radicalaire et contenant au moins deux doubles liaisons de carbone polymérisables, utilisé seul ou en mélange avec d'autres monomères contenant une double liaison polymérisable, un mélange de monomères contenant au maximum 30% en poids de monomère méthacrylique, et d'un initiateur du type peroxyde, et par durcissement de la couche de revêtement par chauffage de celle-ci à une température supérieure à 70°C, caractérisé en ce que l'enduit est durci complètement, dans des temps qui sont de l'ordre de secondes, avec, en tant qu'initiateurs du type peroxyde, des peroxydicarbonates aliphatiques qui sont ajoutés dans des proportions de 0,1 à 10%, en poids par rapport au produit d'enduction total, et en présence de 1 à 30%, en poids, par rapport aux monomères constituant l'enduit, d'agents de protection contre les UV.

2.  Procédé pour la formation d'un enduit résistant au rayage et stable aux agents atmosphériques sur un corps moulé selon la revendication 1, caractérisé en ce que les corps moulés sont faits de matière thermoplastique ou thermoélastique.

3.  Procédé selon la revendication 1 ou 2, caractérisé en ce qu'on utilise, à raison d'au moins 30%, comme monomère contenant au moins deux doubles liaisons de carbone, un composé qui contient trois doubles liaisons de carbone ou plus dans sa molécule.

4.  Procédé selon l'une quelconque des revendications 1 à 3, caractérisé en ce qu'on utilise, à raison d'au moins 70%, en poids, comme monomères contenant au moins deux doubles liaisons de carbone, des monomères formés d'unités acrylate.

5.  Procédé selon l'une quelconque des revendications 1 à 4, caractérisé en ce qu'on utilise, comme agent de protection contre les UV, un agent de protection contre les UV qui peut être inclus en liaison polymère.

6.  Procédé selon l'une quelconque des revendications 1 à 5, caractérisé en ce que l'enduction est effectuée avec un produit d'enduction qui contient jusqu'à 30% en poids d'acide acrylique et/ou d'acide méthacrylique.

7.  Procédé selon l'une quelconque des revendications 1 à 6, caractérisé en ce que le durcissement est effectué dans une atmosphère de gaz protecteur pratiquement dépourvue d'oxygène.

8.  Procédé selon l'une quelconque des revendications 1 à 7, caractérisé en ce que le duscissement de la couche résistante au rayage s'effectue par immersion dans un liquide inerte.

9.  Procédé selon l'une quelconque des revendications 1 à 8, caractérisé en ce que le corps moulé est fait de polyméthacrylate de méthyle, d'un copolymère formé à partir de méthacrylate de méthyle ou d'un polycarbonate.

10. Procédé selon l'une quelconque des revendications 1 à 9, caractérisé en ce qu'un corps moulé produit par extrusion est enduit.

11. Procédé selon l'une quelconque des revendications 1 à 10, caractérisé en ce qu'on procède à l'enduction immédiatement après l'extrusion, tandis que le corps moulé est à la chaleur de l'extrusion.

12. Procédé selon l'une quelconque des revendications 1 à 9, caractérisé en ce que des pièces moulées par injection sont enduites.